# EUROPÄISCHE PATENTANMELDUNG

(11) **EP 0 623 738 A1**
(43) Veröffentlichungstag der Anmeldung: **09.11.1994**
(21) Anmeldenummer: 94101324.5
(22) Anmeldetag: 29.01.1994
(51) Int. Cl.: F01N 3/02

(54) **Russfiltervorrichtung für Dieselmotoren**

(30) Priorität: 05.05.1993 DE 9301608 U
(71) Anmelder: ERNST-APPARATEBAU GmbH & Co., D-58099 Hagen (DE)
(72) Erfinder: Krumme, Karl-Heinz, D-59457 Werl (DE)
(74) Vertreter: COHAUSZ HASE DAWIDOWICZ & PARTNER

(57) **Zusammenfassung**

Die Erfindung betrifft eine Rußfiltervorrichtung für Dieselmotoren mit mehreren parallel nebeneinander in einer zylindrischen Kammer angeordneten Filterkerzen 8, durch deren Wandung von außen nach innen das Abgas hindurchtritt, wobei das Abgas durch einen Einlaßstutzen 2 in eine Vorkammer 4 leitbar ist, die vor den Filterkerzen liegt und von der das Abgas zu den Filterkerzen strömt, und die außen an den Filterkerzen sich absetzende Rußschicht in zeitlichen Abständen durch Heißluft abbrennbar ist, die durch eine Heißlufteinrichtung erzeugbar ist, wobei die Vorkammer 4 zwei zylindrische koaxial angeordnete Lochbleche 17, 18 aufweist, die zwischen sich einen Ringraum 5 bilden, wobei zwischen dem äußeren Lochblech 17 und der Kammerinnenwand ein zweiter Ringraum 4 besteht, in den der Einlaßstutzen 2 mündet.

## Beschreibung

Die Erfindung betrifft eine Rußfiltervorrichtung für Dieselmotoren mit mehreren parallel nebeneinander in einer zylindrischen Kammer angeordneten Filterkerzen, durch deren Wandung von außen nach innen das Abgas hindurchtritt, wobei das Abgas durch einen Einlaßstutzen in eine Vorkammer leitbar ist, die vor den Filterkerzen liegt und von der das Abgas zu den Filterkerzen strömt, und die außen an den Filterkerzen sich absetzende Rußschicht in zeitlichen Abstanden durch Heißluft abbrennbar ist, die durch eine Heißlufteinrichtung erzeugbar ist.

Bei solchen Rußfiltern hat es sich gezeigt, daß die schalldämpfende Wirkung nicht immer ausreichend ist, so daß in bestimmten Fällen ein Schalldämpfer nachgeschaltet bzw. vorgeschaltet wird.

Aufgabe der Erfindung ist es, bei Rußfiltern der eingangs genannten Art die Schalldämpfung zu verbessern.

Diese Aufgabe wird erfindungsgemäß dadurch gelöst, daß die Vorkammer zwei zylindrische koaxial angeordnete Lochbleche aufweist, die zwischen sich einen Ringraum bilden, wobei zwischen dem äußeren Lochblech und der Kammerinnenwand ein zweiter Ringraum besteht, der am Ende durch eine Wand getrennt ist, in den der Einlaßstutzen mündet.

Die zwei im Einlaßbereich angeordneten Lochbleche haben eine hohe schalldämmende Wirkung. Besonders vorteilhaft ist es hierbei, wenn die Größe und/oder Anzahl der Löcher im inneren Lochblech unterschiedlich ist zu denen im äußeren Lochblech. Von Vorteil ist auch, wenn die stirnseitige Kammerwand, an der die Lochbleche liegen, geschlossen ist. Vorzugsweise wird vorgeschlagen, daß der Einlaßstutzen tangential oder axial angeordnet ist. Auch kann die Heißlufteinrichtung außen an der Rußfiltervorrichtung anschließbar sein.

Eine besonders hohe Schalldämmung wird erreicht, wenn in Strömungsrichtung hinter den Filterkerzen ein Schalldämpfer innerhalb der Rußfiltervorrichtung angeordnet ist. Hierbei kann der Schalldämpfer die Wände des Sammelraumes auskleiden, von dem der Auslaß abgeht.

Von größtem Vorteil ist es, wenn der Bereich des Ringraums in den die Abgase eintreten, von dem Bereich des Ringraums in den die Abgase nach vollständigem Durchströmen des Ringraums gelangen, durch eine Wand getrennt ist.

Ein Ausführungsbeispiel der Erfindung ist in den Zeichnungen dargestellt und wird im folgenden näher beschrieben. Es zeigen:

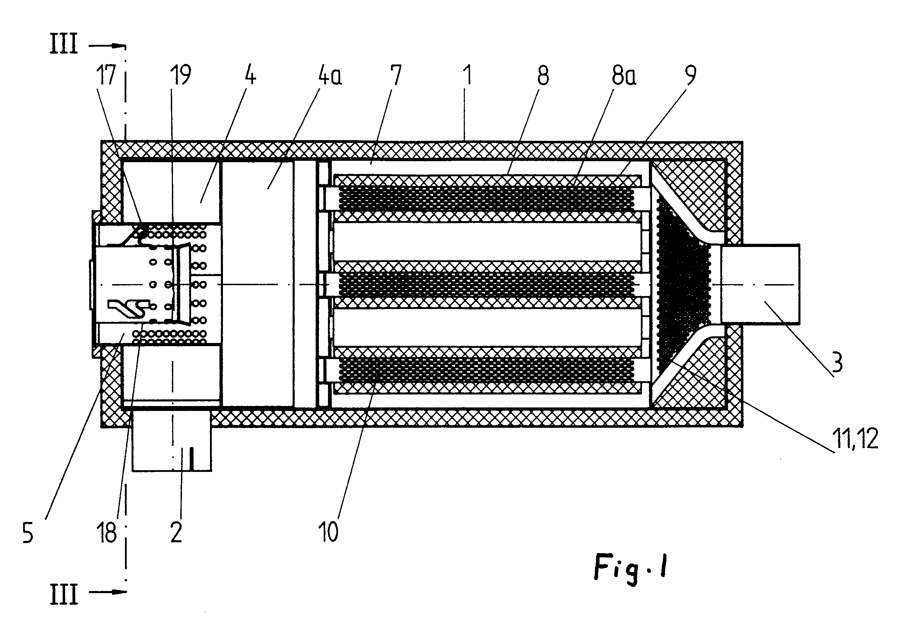

- Figur 1:: Einen axialen Längsschnitt durch den Rußfilter.

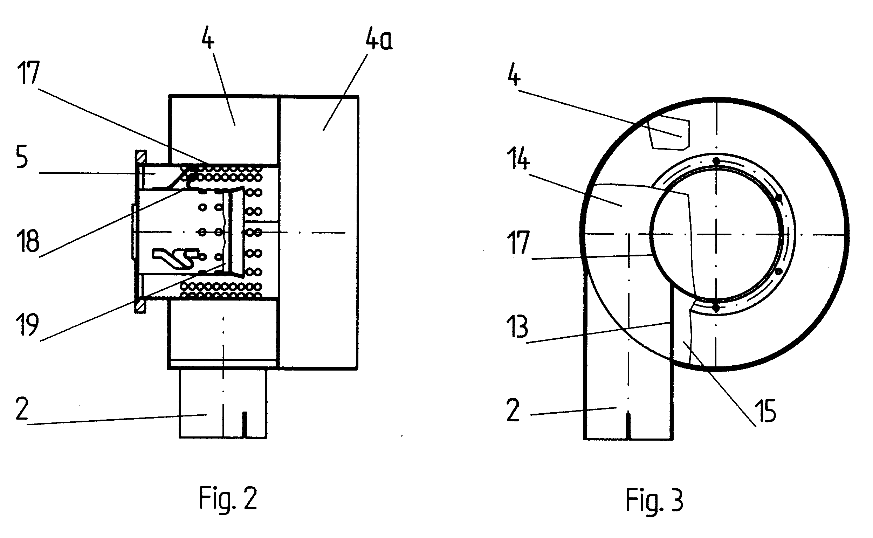

- Figur 2:: Einen axialen Länggschnitt durch das Gehäuse im Bereich des Brenners und
- Figur 3:: einen Schnitt durch den Rußfilter nach III-III in Figur 1.

Der Rußfilter weist ein zylindrisches Gehäuse 1 auf, mit einem seitlichen tangential oder axial angeordneten Einlaß 2 und einem koaxial angeordnetem Auslaß 3. Der Einlaß führt in einen Ringraum 4, der zwei Lochbleche 17, 18 umgibt. Die Flammgase einer Heißlufteinrichtung, insbesondere eines Ölbrenners werden in den Filterraum 7 geführt, in dem sich eine größere Anzahl von Filterkerzen 8 parallel zueinander und achsparallel zum Gehäuse 1 erstrecken. Die Heißlufteinreichtung kann an einer Stirnseite der Vorrichtung ständig befestigt sein oder aber bei Bedarf angeschlossen werden.

Die koaxial im Gehäuse angeordneten Lochbleche 17, 18 sind jeweils zylindrisch bzw. rohrförmig ausgeführt und jeweils mit einem Ende an derjenigen Gehäusestirnseite innen befestigt, die dem Auslaß 3 gegenüber liegt. Das innere Lochblech 18 liegt damit koaxial im äußeren Lochblech 17 ein, so daß beide Lochbleche zwischen sich einen inneren Ringraum 5 bilden, der zusammen mit dem äußeren Ringraum 4 und dem Innenraum 19 des inneren Lochblechs 18 eine hohe Schalldämmung bewirkt.

Die Filterkerzen 8 sind im dargestellten Ausführungsbeispiel Tiefenfilter mit keramischen Wicklungen 9 auf gelochten Metallrohren 10. Die Rohre 10 sind auf dem, dem Brenner zugekehrtem Ende verschlossen und münden mit den gegenüberliegenden Enden in einem Sammelraum 11, der von einem Schalldämpfer 12 umgeben sein kann und zu dem Auslaß 3 führt.

Die Abgase des Dieselmotors gelangen durch den Einlaß 2 in den Ringraum 4 und von dort über einen Zwischenraum 4a in den Filterraum 7. Sie durchströmen den Filterraum 7 und durchdringen die zylindrischen Wände 8a der Filterkerzen 8, um danach durch das Innere der Filterkerzen 8 hindurch in den Sammelraum 11 und zum Auslaß 3 zu strömen. Hierbei setzt sich der in den Abgasen befindliche Ruß in den keramischen Wicklungen 9 und an der Außenseite als eine Schicht ab, die in der Zeichnung nicht dargestellt ist.

In dem Ringraum 4 ist ein Leitblech 13 tangential zur zylindrischen Lochwand der Brennkammer 4a befestigt. Das Leitblech 13 trennt den Bereich 14 des Ringraums 4, in den die Abgase eintreten, von dem Bereich 15 des Ringraums 4, in den die Abgase nach vollständigem Durchströmen des Ringraums gelangen. Hierbei ist das Leitblech 13 derart schräg zur auftreffenden Strömung gestellt, daß der Abgasstrom zum Filterraum 7, bzw. zur Expansionskammer hingeführt wird.

## Patentansprüche

1. Rußfiltervorrichtung für Dieselmotoren mit mehreren parallel nebeneinander in einer zylindrischen Kammer angeordneten Filterkerzen (8), durch deren Wandung von außen nach innen das Abgas hindurchtritt, wobei das Abgas durch einen Einlaßstutzen (2) in eine Vorkammer (4) leitbar ist, die vor den Filterkerzen liegt und von der das Abgas zu den Filterkerzen strömt, und die außen an den Filterkerzen sich absetzende Rußschicht in zeitlichen Abständen durch Heißluft abbrennbar ist, die durch eine Heißlufteinrichtung erzeugbar ist, **dadurch gekennzeichnet,** daß die Vorkammer (4) zwei zylindrische koaxial angeordnete Lochbleche (17, 18) aufweist, die zwischen sich einen Ringraum (5) bilden, wobei zwischen dem äußeren Lochblech (17) und der Kammerinnenwand ein zweiter Ringraum (4) besteht, in den der Einlaßstutzen (2) mündet.

2. Rußfiltervorrichtung nach Anspruch 1,
**dadurch gekennzeichnet,** daß die Größe und/oder Anzahl der Löcher im inneren Lochblech (18) unterschiedlich ist zu denen im äußeren Lochblech (17).

3. Rußfiltervorrichtung nach Anspruch 1 oder 2,
**dadurch gekennzeichnet,** daß die stirnseitige Kammerwand, an der die Lochbleche (17, 18) liegen, geschlossen ist.

4. Rußfiltervorrichtung nach einem der vorherigen Ansprüche, **dadurch gekennzeichnet,** daß der Einlaßstutzen (2) tangential oder axial angeordnet ist.

5. Rußiltervorrichtung nach einem der vorherigen Ansprüche, **dadurch gekennzeichnet,** daß die Heißlufteinrichtung außen an der Rußfiltervorrichtung anschließbar ist.

6. Rußfiltervorrichtung nach einem der vorherigen Ansprüche, **dadurch gekennzeichnet,** daß in Strömungsrichtung hinter den Filterkerzen (8) ein Schalldampfer (12) innerhalb der Rußfiltervorrichtung angeordnet ist.

7. Rußfiltervorrichtung nach Anspruch 6,
**dadurch gekennzeichnet,** daß der Schalldämpfer (12) die Wände des Sammelraumes (11) auskleidet, von dem der Auslaß (3) abgeht.

8. Rußfiltervorrichtung nach einem der vorherigen Ansprüche, **dadurch gekennzeichnet,** daß der Bereich (4a) des Ringraums (4) in den die Abgase eintreten, von dem Bereich (4b) des Ringraums in den die Abgase nach vollständigem Durchströmen des Ringraums gelangen, durch eine Wand (13) getrennt ist.

9. Rußfiltervorrichtung nach Anspruch 8,
**dadurch gekennzeichnet,** daß die Wand (13) tangential zur zylindrischen Lochwand der Brennkammer (4a) angeordnet ist.

10. Rußfiltervorrichtung nach Anspruch 8 oder 9,
**dadurch gekennzeichnet,** daß die Wand (13) ein Leitblech ist.

11. Rußfiltervorrichtung nach Anspruch 9 oder 10,
**dadurch gekennzeichnet,** daß das Leitblech (13) derart schräg zur auftreffenden Strömung gestellt ist, daß der Abgasstrom zum Filterraum (7) hingeführt wird.
